# FASCICULE DE BREVET EUROPEEN

(11) **EP 2 786 799 B1**
(45) Date de publication et mention de la délivrance du brevet: **21.06.2017**
(21) Numéro de dépôt: 14158595.0
(22) Date de dépôt: 10.03.2014
(51) Int. Cl.: B01J 8/06

(54) **Procédé de chargement de réacteur catalytique multitubulaire**
Ladeverfahren eines katalytischen Rohrbündelreaktors
Method for loading a multitubular catalytic reactor

(30) Priorité: 02.04.2013 FR 1352952
(43) Date de publication de la demande: 08.10.2014
(73) Titulaire: ARKEMA FRANCE, 92700 Colombes (FR)
(72) Inventeur: Dupont, Nicolas, 57500 SAINT-AVOLD (FR); Lambert, Emmanuel, 57660 ALTRIPPE (FR); Souet, Arnaud, 57000 METZ (FR); Urbaniak, David, 57660 LELLING (FR)

(56) Documents cités:
- US-A1- 2004 191 135
- US-A1- 2007 098 605
- US-A1- 2010 059 137
- US-A1- 2011 017 348

## Description

### DOMAINE DE L'INVENTION

La présente invention concerne un procédé de chargement d'un réacteur catalytique multitubulaire, ainsi qu'un ensemble d'inserts adapté à la mise en oeuvre de ce procédé.

### ARRIERE-PLAN TECHNIQUE

Les réacteurs catalytiques multitubulaires peuvent comprendre plusieurs dizaines de milliers de tubes, qui constituent autant de compartiments réactionnels. Du fait de la désactivation du catalyseur au cours du temps, il est nécessaire de procéder périodiquement au remplacement du catalyseur, c'est-à-dire à la vidange des tubes et au remplissage des tubes avec du catalyseur frais.

Il s'agit d'une opération complexe, qui peut prendre plusieurs semaines pour être menée à bien, ce qui représente un coût important pour l'exploitant. Il est donc souhaitable que le procédé de remplissage du réacteur soit aussi rapide que possible.

L'une des principales contraintes de l'opération est la nécessité de doser précisément la quantité de catalyseur (généralement sous forme granulaire) dans chaque tube réactionnel. Toute hétérogénéité de remplissage entre les différents tubes entraîne en effet une différence de perte de charge entre les compartiments du réacteur, d'où une diminution du rendement. Cela permet aussi d'éviter tout passage préférentiel du gaz réactionnel ou de pontage de catalyseur dans le tube.

Le document EP 0963785 décrit un dispositif de chargement pour l'introduction d'un catalyseur en grains dans des tubes réactionnels. Le dispositif se fixe en entrée des tubes et permet de canaliser un flux de catalyseur introduit dans les tubes.

Le document EP 1654054 décrit des manchons de chargement permettant de contrôler la hauteur du catalyseur à l'intérieur des tubes réactionnels.

Toutefois, les réacteurs catalytiques contiennent fréquemment deux voire trois couches de catalyseurs différents. Ces couches doivent être disposées dans les tubes réactionnels selon un ordre précis et avec des épaisseurs de couches bien définies. Or l'état de la technique ne permet pas de gérer de façon satisfaisante un remplissage de réacteur multitubulaire avec plusieurs catalyseurs, et notamment lorsque, afin d'accélérer le processus de remplissage, on souhaite procéder au remplissage des différents catalyseurs de manière simultanée à l'échelle du réacteur.

Il existe donc un besoin de mettre au point un procédé de remplissage de réacteur avec une pluralité de catalyseurs plus efficace et/ou plus rapide que dans l'état de la technique.

### RESUME DE L'INVENTION

L'invention concerne en premier lieu un procédé de chargement d'un réacteur catalytique comprenant une pluralité de compartiments réactionnels tubulaires présentant une entrée et un fond, le procédé comprenant les étapes suivantes :
a) disposition d'une couche d'un premier catalyseur dans le fond des compartiments réactionnels tubulaires ;
b) disposition d'une couche d'un deuxième catalyseur dans les compartiments réactionnels tubulaires au-dessus de la couche de premier catalyseur ;
le premier catalyseur et le deuxième catalyseur étant des catalyseurs en grains ;
dans lequel :
- l'étape a) comprend l'insertion de premiers inserts dans les compartiments réactionnels tubulaires puis l'introduction du premier catalyseur dans les premiers inserts, chaque premier insert comportant :
   - un corps tubulaire adapté à être introduit dans un compartiment réactionnel tubulaire,
   - une tête adaptée à coopérer avec l'entrée du compartiment réactionnel tubulaire pour retenir le premier insert,
   - la tête étant pourvue d'un canal longitudinal traversant communiquant avec l'intérieur du corps tubulaire ;
- l'étape b) comprend l'insertion de deuxièmes inserts dans les compartiments réactionnels tubulaires puis l'introduction du deuxième catalyseur dans les deuxièmes inserts, chaque deuxième insert comportant :
   - un corps tubulaire adapté à être introduit dans un compartiment réactionnel tubulaire,
   - une tête adaptée à coopérer avec l'entrée du compartiment réactionnel tubulaire pour retenir le deuxième insert,
   - la tête étant pourvue d'un canal longitudinal traversant communiquant avec l'intérieur du corps tubulaire ;
- les corps tubulaires des premiers inserts ayant une dimension longitudinale (L1) supérieure à la dimension longitudinale (L2) des corps tubulaires des deuxièmes inserts ;
- les têtes des premiers inserts étant visuellement distinctes des têtes des deuxièmes inserts ; et
- les premiers inserts étant retirés avant l'insertion des deuxièmes inserts.

Selon un mode de réalisation, le procédé comprend en outre l'étape suivante :
c) disposition d'une couche d'un troisième catalyseur dans les compartiments réactionnels tubulaires au-dessus de la couche de deuxième catalyseur ;
le troisième catalyseur étant un catalyseur en grains ;
dans lequel :
- l'étape c) comprend l'insertion de troisièmes inserts dans les compartiments réactionnels tubulaires puis l'introduction du troisième catalyseur dans les troisièmes inserts, chaque troisième insert comportant :
   - un corps tubulaire adapté à être introduit dans un compartiment réactionnel tubulaire,
   - une tête adaptée à coopérer avec l'entrée du compartiment réactionnel tubulaire pour retenir le troisième insert,
   - la tête étant pourvue d'un canal longitudinal traversant communiquant avec l'intérieur du corps tubulaire ;
- les corps tubulaires des deuxièmes inserts ayant une dimension longitudinale (L2) supérieure à la dimension longitudinale (L3) des corps tubulaires des troisièmes inserts ;
- les têtes des troisièmes inserts étant visuellement distinctes des têtes des premiers inserts et des têtes des deuxièmes inserts ;
- les deuxièmes inserts étant retirés avant l'insertion des troisièmes inserts.

Selon un mode de réalisation, les têtes des premiers, deuxièmes et éventuellement troisièmes inserts sont de couleurs différentes.

Selon un mode de réalisation, les têtes des premiers, deuxièmes et éventuellement troisièmes inserts présentent une section transversale de forme polygonale, de préférence hexagonale ; et/ou les têtes des premiers inserts lors de l'introduction du premier catalyseur, les têtes des deuxièmes inserts lors de l'introduction du deuxième catalyseur, et éventuellement les têtes des troisièmes inserts lors de l'introduction du troisième catalyseur, sont jointives.

Selon un mode de réalisation, chaque étape a), b) et éventuellement c) comprend, après l'introduction du premier, deuxième ou troisième catalyseur, le retrait des premiers, deuxièmes ou troisièmes inserts, puis la réinsertion des premiers, deuxièmes ou troisièmes inserts dans les compartiments réactionnels tubulaires en butée de la couche de premier catalyseur, de la couche de deuxième catalyseur ou de la couche de troisième catalyseur. Cette réinsertion a pour objet de pouvoir vérifier le niveau de catalyseur effectivement présent dans les tubes, par exemple au moyen d'une marque extérieure faite sur chaque insert.

Selon un mode de réalisation, les étapes a), b) et éventuellement c) sont effectuées au moins en partie concurremment dans différents compartiments réactionnels tubulaires du réacteur.

Selon un mode de réalisation, le réacteur est divisé en sections, chaque étape a), b) et éventuellement c) étant effectuée de manière simultanée pour l'ensemble des compartiments réactionnels tubulaires de chaque section.

L'invention a également pour objet un ensemble d'inserts pour le chargement d'un réacteur catalytique comprenant une pluralité de compartiments réactionnels tubulaires, l'ensemble d'inserts comprenant des premiers inserts et des deuxièmes inserts, dans lequel chaque premier insert et chaque deuxième insert comprend :
- un corps tubulaire adapté à être introduit dans un compartiment réactionnel tubulaire,
- une tête adaptée à coopérer avec une entrée de compartiment réactionnel tubulaire pour retenir l'insert,
- la tête étant pourvue d'un canal longitudinal traversant communiquant avec l'intérieur du corps tubulaire ;
les corps tubulaires des premiers inserts ayant une dimension longitudinale (L1) supérieure à la dimension longitudinale (L2) des corps tubulaires des deuxièmes inserts, et les têtes des premiers inserts étant visuellement distinctes et de couleurs différentes des têtes des deuxièmes inserts.

L'ensemble d'inserts selon l'invention peut comprendre en outre des troisièmes inserts, dans lequel chaque troisième insert comprend :
- un corps tubulaire adapté à être introduit dans un compartiment réactionnel tubulaire,
- une tête adaptée à coopérer avec une entrée de compartiment réactionnel tubulaire pour retenir l'insert,
- la tête étant pourvue d'un canal longitudinal traversant communiquant avec l'intérieur du corps tubulaire ;
les corps tubulaires des deuxièmes inserts ayant une dimension longitudinale (L2) supérieure à la dimension longitudinale (L3) des corps tubulaires des troisièmes inserts, et les têtes des troisièmes inserts étant visuellement distinctes et de couleurs différentes des têtes des premiers inserts et des deuxièmes inserts.

L'ensemble d'inserts selon l'invention est adapté à la mise en oeuvre du procédé tel que décrit ci-dessus.

La présente invention permet de surmonter les inconvénients de l'état de la technique. Elle fournit plus particulièrement un procédé de remplissage de réacteur avec une pluralité de catalyseurs plus efficace et/ou plus rapide que dans l'état de la technique.

Cela est accompli grâce à l'utilisation d'inserts de types différents permettant de disposer des couches superposées de catalyseurs dans les compartiments réactionnels. Les têtes des inserts sont visuellement distinctes selon les types d'inserts, ce qui permet d'éviter les erreurs de remplissage et permet ainsi de mettre en oeuvre un remplissage fiable des différentes couches de catalyseurs de manière simultanée à l'échelle du réacteur.

### BREVE DESCRIPTION DES FIGURES

La **figure 1** est une vue en coupe d'un compartiment réactionnel tubulaire à différents stades de remplissage.
La **figure 2** est une vue en coupe d'un ensemble d'inserts selon l'invention.
La **figure 3** est une vue en coupe illustrant les étapes successives du remplissage d'une couche de catalyseur dans un compartiment réactionnel tubulaire.
La **figure 4** est une vue de dessus montrant les têtes des inserts selon l'invention qui sont insérés dans des compartiments réactionnels tubulaires adjacents.
La **figure 5** est une vue de dessus schématique, illustrant la division du réacteur en sections pour les besoins du remplissage de celui-ci.

### DESCRIPTION DE MODES DE REALISATION DE L'INVENTION

L'invention est maintenant décrite plus en détail et de façon non limitative dans la description qui suit.

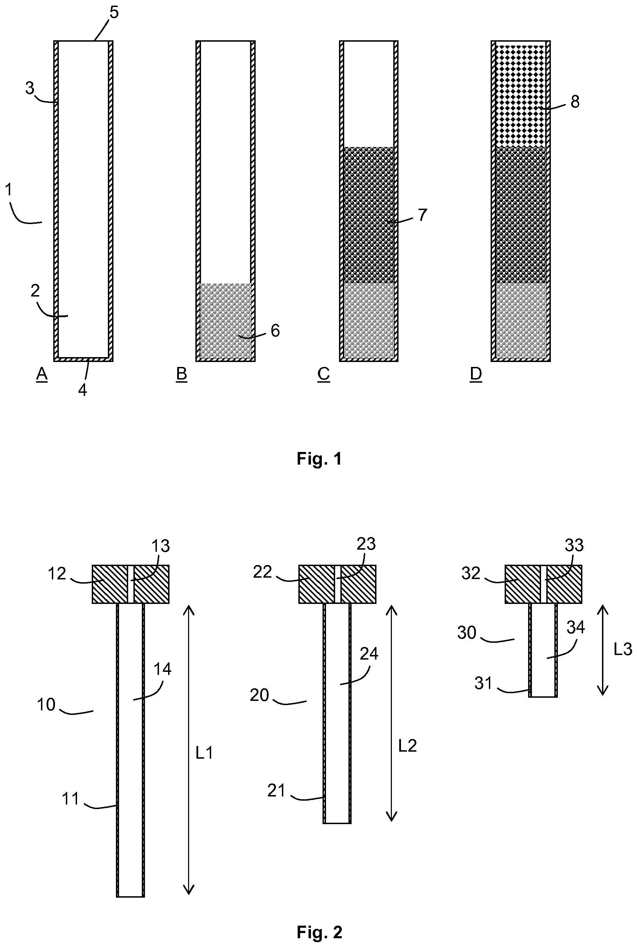

En faisant référence à la **figure 1****,** un réacteur catalytique multitubulaire comporte une pluralité de compartiments réactionnels tubulaires 1. Un compartiment réactionnel tubulaire 1 vide est représenté sur la vue A. Chaque compartiment réactionnel tubulaire 1 comporte une paroi 3 qui délimite un espace intérieur 2 destiné à recevoir les catalyseurs et dans lequel la ou les réactions recherchées se produisent, lorsque le réacteur est en fonctionnement. L'espace intérieur 2 est un volume qui est généralement un cylindre, de préférence droit, et de préférence de section circulaire. L'axe du cylindre correspondant est appelé axe longitudinal du compartiment 1.

Généralement les axes longitudinaux de l'ensemble des compartiments 1 sont alignés, de préférence selon la verticale. Les compartiments 1 forment ainsi un maillage dans le réacteur, de préférence définissant un pas triangulaire équilatéral (pour une optimisation de la compacité), mais qui peut éventuellement être d'un autre type, par exemple carré.

Le réacteur peut par exemple comprendre de 10 à 1 000 000 de compartiments, de préférence de 100 à 100 000 compartiments, et notamment de 1 000 à 50 000 compartiments, plus particulièrement de 10 000 à 30 000 compartiments.

Chaque compartiment 1 comporte un fond 4 (par exemple une plaque perforée type tripode ou un ressort) et une entrée 5 qui est une extrémité ouverte (lorsque le réacteur est ouvert). Les systèmes d'alimentation en réactifs et de collecte de produits, ainsi que le système d'échange de chaleur, ne sont pas détaillés ici et sont connus en soi.

Selon l'invention, chaque compartiment 1 doit être rempli avec au moins deux catalyseurs différents ou, dans l'exemple illustré, avec trois catalyseurs. Il est entendu que dans certains modes de réalisation de l'invention, plus de trois catalyseurs (par exemple quatre) sont utilisés. Dans ce cas, les opérations qui sont décrites ici n'ont qu'à être répétées de manière similaire en conséquence.

Les vues B, C et D représentent un compartiment 1 à différents stades de remplissage, à savoir respectivement : avec une couche de premier catalyseur 6 disposée sur le fond 4 du compartiment 1 ; avec en outre une couche de deuxième catalyseur 7 disposée par-dessus la couche de premier catalyseur 6 ; et avec en outre une couche de troisième catalyseur 8 disposée par-dessus la couche de deuxième catalyseur 7. Chaque catalyseur est sous forme granulaire (billes, granulés, autres types de grains, mais généralement n'est pas une poudre). Chaque catalyseur peut être un catalyseur unique ou un mélange de catalyseurs, auquel cas la composition du mélange diffère d'une couche à l'autre.

Afin de procéder au remplissage d'un compartiment 1 selon la séquence d'étapes illustrée à la **figure 1****,** l'invention propose un ensemble, ou kit, d'inserts, qui est représenté à la **figure 2****.**

L'ensemble comporte au moins un premier insert 10 (en un exemplaire ou de préférence en plusieurs exemplaires) et un deuxième insert 20 (en un exemplaire ou de préférence en plusieurs exemplaires). Dans l'exemple illustré, l'ensemble comporte également un troisième insert 30 (en un exemplaire ou de préférence en plusieurs exemplaires). De manière générale, le nombre d'inserts différents correspond au nombre de couches de catalyseur devant être disposées dans le réacteur. Chaque insert 10, 20, 30 est adapté afin de permettre le remplissage d'un compartiment 1 avec l'une des couches de catalyseurs.

Chaque insert 10, 20, 30 comprend un corps tubulaire 11, 21, 31 et une tête 12, 22, 32. Le corps tubulaire 11, 21, 31 comporte une paroi tubulaire orientée selon un axe longitudinal. De préférence le corps tubulaire 11, 21, 31 présente une forme cylindrique, et plus particulièrement une forme cylindrique droite, de préférence avec une section transversale (c'est-à-dire perpendiculaire à l'axe longitudinal) circulaire.

La paroi tubulaire définit une lumière 14, 24, 34 du corps tubulaire 11, 21, 31. A l'une de ses extrémités longitudinales, le corps tubulaire 11, 21, 31 est lié à une tête 12, 22, 32 formant un épaulement. En d'autres termes, la tête 12, 22, 32 présente une section transversale supérieure à celle du corps tubulaire 11, 21, 31.

La tête 12, 22, 32 comporte un canal longitudinal 13, 23, 33, qui est aligné selon l'axe longitudinal du corps tubulaire 11, 21, 31, et qui communique avec la lumière 14, 24, 34 du corps tubulaire 11, 21, 31. L'insert est généralement ouvert, c'est-à-dire qu'aussi bien l'extrémité de la lumière 14, 24, 34 opposée à la tête 12, 22, 32, que l'extrémité du canal 13, 23, 33 opposée au corps tubulaire 11, 21, 31, sont des extrémités ouvertes.

La dimension interne transversale du canal 13, 23, 33 (par exemple le diamètre, dans le cas d'un canal à section circulaire) est généralement inférieure à la dimension de la lumière 14, 24, 34.

Les premiers, deuxièmes et troisièmes inserts 10, 20, 30 ont généralement la même forme, si ce n'est que leurs corps tubulaires 11, 21, 31 sont de longueurs différentes. La longueur du corps tubulaire 11, 21, 31 correspond à la distance entre l'extrémité du corps tubulaire 11, 21, 31 opposée à la tête 12, 22, 32 et le point de jonction entre le corps tubulaire 11, 21, 31 et la tête 12, 22, 32.

La longueur L1 du premier insert 10 est supérieure à la longueur L2 du deuxième insert 20, qui est elle-même supérieure à la longueur L3 du troisième insert 30 (et ainsi de suite, en cas d'inserts supplémentaires).

On peut toutefois également prévoir que les inserts 10, 20, 30 présentent d'autres différences de formes, par exemple en ce qui concerne la dimension transversale des corps tubulaires 11, 21, 31, l'épaisseur de la paroi des corps tubulaires 11, 21, 31, et surtout la dimension transversale des canaux longitudinaux 13, 23, 33, qui peut avantageusement être adaptée à la taille des grains de catalyseur, comme exposé ci-dessous.

A titre d'illustration, les premiers inserts 10 peuvent avoir une longueur L1 de 1,5 à 2,5 m, par exemple de 1,8 à 2,2 m ; les deuxièmes inserts 20 peuvent avoir une longueur L2 de 1 à 2 m, par exemple de 1,2 à 1,8 m ; et les troisièmes inserts 30 peuvent avoir une longueur L3 de 10 à 60 cm, par exemple de 15 à 30 cm.

Les inserts 10, 20, 30 peuvent être en tout matériau rigide, par exemple en matière plastique comme le PVC.

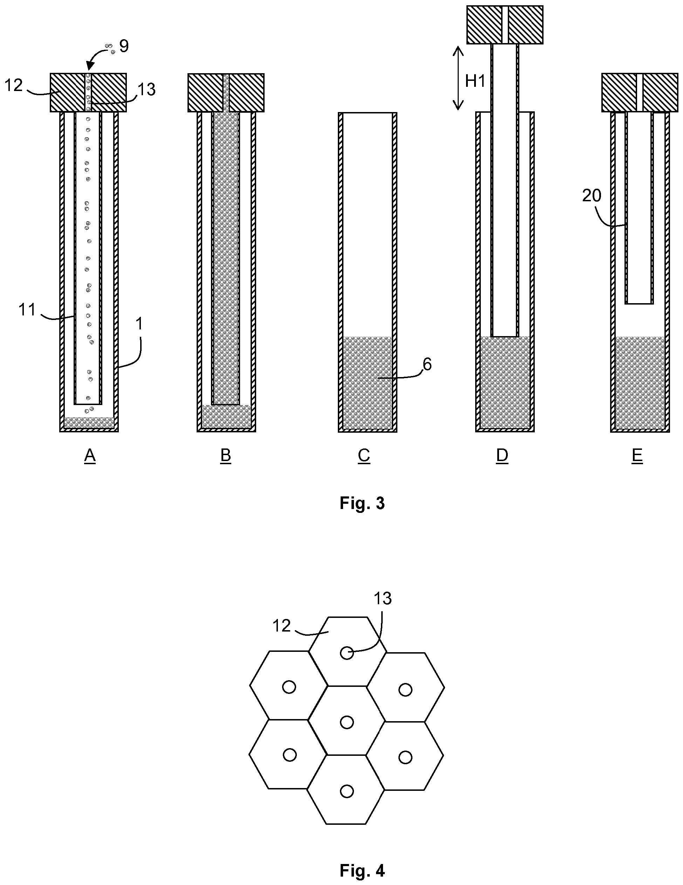

La méthode de remplissage est maintenant décrite en faisant référence à la **figure 3****.**

Selon la vue A, le corps tubulaire 11 du premier insert 10 est inséré dans le compartiment 1. Les dimensions du corps tubulaire 11 (notamment sa section transversale) sont choisies de sorte à permettre cette insertion. La tête 12 du premier insert 10 coopère avec l'entrée 5 du compartiment 1 pour retenir le premier insert 10 et éviter qu'il ne pénètre complètement et ne chute dans le compartiment 1 par gravité. Les dimensions de la tête 12 (notamment sa section transversale) sont donc choisies à cette fin.

Les grains de catalyseur 9 sont introduits dans le compartiment 1 *via* le canal longitudinal 13, puis ils tombent par gravité dans la lumière 14 du corps tubulaire 11 de l'insert 10 et s'accumulent dans l'espace intérieur 2 du compartiment 1.

Au bout d'un certain temps, le niveau de catalyseur dans l'espace intérieur 2 remonte et atteint l'extrémité libre du corps tubulaire 11 de l'insert 10. Le catalyseur commence alors à s'accumuler dans la lumière 14 de l'insert 10 car, du fait de sa nature granulaire, le catalyseur ne peut remonter dans l'espace intérieur 2 autour de la paroi du corps tubulaire 11. Lorsque la lumière 14 est pleine de catalyseur, le canal longitudinal 13 se remplit à son tour. La vue B représente l'insert 10 totalement rempli de catalyseur.

Dans une phase suivante, l'insert 10 est retiré du compartiment 1. Lors du retrait de l'insert 10, le catalyseur contenu dans l'insert 10 s'écoule dans le compartiment 1. La vue C représente le compartiment 1 après retrait de l'insert 10. Le dépôt de la couche de premier catalyseur 6 est alors terminé. Il est parfois nécessaire (en fonction de la taille ou de la géométrie du catalyseur par exemple) de faire vibrer l'insert pour faire descendre le catalyseur à l'intérieur de l'insert. On peut alors taper doucement l'insert sur le bord du tube tout en le retirant progressivement.

La quantité de premier catalyseur introduite dans la couche 6 est ajustée sans dosage ou pesage particulier. C'est le choix des dimensions du premier insert 10 (en particulier longueur L1 et section transversale de la lumière 14) qui permet d'ajuster précisément le volume de la couche 6 et donc la quantité de catalyseur présent.

Dans une phase suivante, illustrée sur la vue D, le premier insert 10 est à nouveau introduit dans le compartiment 1, jusqu'à ce que l'extrémité libre du corps tubulaire 11 vienne en butée de la couche de premier catalyseur 6. Cette phase est une phase de vérification du remplissage des compartiments 1, puisque l'ensemble des premiers inserts 10 ainsi introduits dans les compartiments 1 doivent être alignés verticalement, à une même distance H1 de l'entrée 5 des compartiments 1 (pigeage). Cette vérification peut être faite par exemple par le moyen d'une marque extérieure faite sur chaque insert (11, 21, 31) qui permet de vérifier la hauteur H1 pour chaque insert. Toute anomalie d'alignement indique un remplissage incorrect, qu'il s'agit alors de corriger éventuellement.

Ensuite, les étapes représentées dans les vues A, B, C et D peuvent être répétées de manière similaire pour disposer la couche de deuxième catalyseur 7, le cas échéant la couche de troisième catalyseur 8, et le cas échéant des couches de catalyseurs supplémentaires, les premiers inserts 10 étant remplacés par les deuxièmes inserts 20, puis les troisièmes inserts 30, et ainsi de suite. Ainsi, la vue E montre le deuxième insert 20 positionné au-dessus de la couche de premier catalyseur 6, pour l'introduction du deuxième catalyseur. Les différentes longueurs L1, L2, L3 des inserts successifs sont donc liées à l'élévation du niveau de catalyseur dans les compartiments 1 lorsque l'on passe d'un insert à l'autre.

L'introduction de chaque catalyseur dans les inserts 10, 20, 30 s'effectue de préférence en versant le catalyseur au-dessus des têtes 12, 22, 32 des inserts 10, 20, 30. Il est avantageux que les têtes 12, 22, 32 des inserts 10, 20, 30 soient jointives lorsque les inserts 10, 20, 30 sont disposés dans les compartiments réactionnels 1, c'est-à-dire que l'espace libre entre deux têtes 12, 22, 32 adjacentes soit inférieur à la taille d'un grain de catalyseur, afin d'éviter la chute de grains de catalyseur entre les inserts 10, 20,30.

Par conséquent, il est préféré que les têtes 12, 22, 32 des inserts 10, 20, 30 aient une forme polygonale (en section transversale), adaptée au type de réseau formé par les compartiments 1 dans le réacteur. Par exemple, lorsque les compartiments 1 ont un pas triangulaire équilatéral, ce qui est le cas le plus fréquent, les têtes 12, 22, 32 ont une forme hexagonale dans la section transversale, comme illustré en **figure 4****.**

La dimension transversale du canal longitudinal 13, 23, 33 (c'est-à-dire le diamètre, dans le cas d'une section circulaire) est de préférence choisie en fonction de la taille des grains de catalyseur, de sorte à éviter un débit excessif de catalyseur dans le canal longitudinal 13, 23, 33, pouvant entraîner des phénomènes de pontage dus à la formation de blocs de catalyseur. Par exemple, la dimension transversale du canal longitudinal 13, 23, 33 est choisie comme étant de 1,2 à 2 fois la dimension maximale des grains de catalyseur.

Lorsque les têtes 12, 22, 32 des inserts 10, 20, 30 sont jointives, elles forment une surface d'appui au-dessus des compartiments 1. Cette surface est alors rendue plane par la présence des têtes des inserts alors que la plaque tubulaire en elle-même présente de nombreuses irrégularités rendant difficile la répartition du catalyseur directement sur la plaque tubulaire. Le catalyseur en grains peut alors être répandu directement sur l'ensemble de cette surface d'appui, sans procéder à un dosage individuel pour chaque compartiment 1. Puis le catalyseur ainsi répandu est poussé dans les différents canaux longitudinaux 13, 23, 33 par exemple au moyen d'une balayette ou d'un appareil de soufflage. Un système d'aspiration au-dessus de la surface d'appui peut être prévu afin d'éviter la présence de poussières toxiques dans l'atmosphère ambiante.

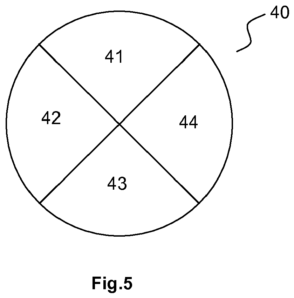

Afin d'augmenter la rapidité de l'opération de remplissage, il peut être utile de diviser le réacteur en sections. Par exemple, en référence à la **figure 5****,** le réacteur 40 de section transversale circulaire peut être divisé en quartiers 41, 42, 43, 44. La division en sections (au nombre de deux, trois, quatre, cinq, six sections ou davantage) peut être réalisée en disposant des instruments de séparation au-dessus des compartiments 1, par exemple des parois amovibles.

Ainsi, plusieurs étapes différentes du procédé de remplissage peuvent être effectuées en parallèle dans les diverses sections, ce qui accélère le remplissage.

A titre d'exemple, à un instant donné, on peut :
- introduire le premier catalyseur dans une première section 41 (selon la méthode illustrée en vue A de la **figure 3**) ;
- vérifier la régularité de la couche de premier catalyseur 6 déposée dans une deuxième section 42 (en réintroduisant les premiers inserts 10 selon la méthode illustrée en vue D de la **figure 3**) ;
- introduire le deuxième catalyseur dans une troisième section 43 (par analogie avec la méthode illustrée en vue A de la **figure 3**), au-dessus d'une couche de premier catalyseur 6 déjà déposée ;
- vérifier la régularité de la couche de deuxième catalyseur 7 déposée dans une quatrième section 44 (en réintroduisant les deuxième inserts 20 de manière analogue à ce qui est illustré en vue D de la **figure 3**).

L'invention prévoit que les têtes 12, 22, 32 des inserts 10, 20, 30 soient visuellement distinctes selon le type d'insert. Par exemple, si trois types d'inserts sont utilisés, alors les têtes 12 des premiers inserts 10 sont visuellement distinctes des têtes 22 des deuxièmes inserts 20 ; les têtes 32 des troisièmes inserts 30 sont visuellement distinctes des têtes 22 des deuxièmes inserts 20; et les têtes 12 des premiers inserts 10 sont visuellement distinctes des têtes 32 des troisièmes inserts 30.

De manière préférée, par « *visuellement distinctes* » on entend des têtes de couleurs unies différentes. Mais on peut également envisager des têtes portant des motifs différents, ou pourvues d'accessoires distincts (étiquettes de couleurs différentes, drapeaux différents)...

Cela permet d'éviter ou à tout le moins d'identifier immédiatement, visuellement et de manière très simple les erreurs lors du remplissage (notamment l'utilisation d'un insert de mauvaise catégorie).

Les avantages du procédé de l'invention sont maintenant illustrés dans l'exemple ci-après comparativement à un procédé classique de chargement d'un réacteur multitubulaire.

### Exemple

Le même réacteur industriel, constitué de 15 000 tubes, a été chargé selon le procédé de l'invention et selon un procédé classique ne mettant pas en oeuvre l'ensemble d'inserts tel que décrit dans l'invention, mais réalisé à l'aide de machines vibrantes.

Les catalyseurs (au nombre de deux) et les hauteurs de chargements sont identiques pour les deux procédés.

Après le remplissage complet du réacteur, une vérification de la qualité du chargement est faite en mesurant la perte de charge de chaque tube. Lorsque la perte de charge du tube mesurée est différente de plus de 8% de la moyenne des pertes de charge des tubes du réacteur, ce tube est repris, c'est-à-dire vidé puis rempli à nouveau jusqu'à obtenir un chargement identique.

Ainsi, le nombre de tubes repris pour le procédé de chargement selon l'invention a été de 3. Alors que le nombre de tubes repris pour le procédé de chargement classique a été de 274 tubes.

Le procédé de chargement selon l'invention a permis en outre une réduction de 30% du temps de chargement, ce qui est considérable pour une application industrielle.

## Revendications

1. Procédé de chargement d'un réacteur catalytique comprenant une pluralité de compartiments réactionnels tubulaires (1) présentant une entrée (5) et un fond (4), le procédé comprenant les étapes suivantes :
a) disposition d'une couche d'un premier catalyseur (6) dans le fond (4) des compartiments réactionnels tubulaires (1) ;
b) disposition d'une couche d'un deuxième catalyseur (7) dans les compartiments réactionnels tubulaires (1) au-dessus de la couche de premier catalyseur (6) ;
le premier catalyseur et le deuxième catalyseur étant des catalyseurs en grains ;
dans lequel :
- l'étape a) comprend l'insertion de premiers inserts (10) dans les compartiments réactionnels tubulaires (1) puis l'introduction du premier catalyseur dans les premiers inserts (10), chaque premier insert (10) comportant :
• un corps tubulaire (11) adapté à être introduit dans un compartiment réactionnel tubulaire (1),
• une tête adaptée (12) à coopérer avec l'entrée (5) du compartiment réactionnel tubulaire (1) pour retenir le premier insert (10),
• la tête (12) étant pourvue d'un canal longitudinal (13) traversant communiquant avec l'intérieur du corps tubulaire (11) ;
- l'étape b) comprend l'insertion de deuxièmes inserts (20) dans les compartiments réactionnels tubulaires (1) puis l'introduction du deuxième catalyseur dans les deuxièmes inserts (20), chaque deuxième insert (20) comportant :
• un corps tubulaire (21) adapté à être introduit dans un compartiment réactionnel tubulaire (1),
• une tête (22) adaptée à coopérer avec l'entrée (5) du compartiment réactionnel tubulaire (1) pour retenir le deuxième insert (20),
• la tête (22) étant pourvue d'un canal longitudinal (23) traversant communiquant avec l'intérieur du corps tubulaire (21) ;
- les corps tubulaires (11) des premiers inserts (10) ayant une dimension longitudinale (L1) supérieure à la dimension longitudinale (L2) des corps tubulaires (21) des deuxièmes inserts (20) ;
- les têtes (12) des premiers inserts (10) étant visuellement distinctes des têtes (22) des deuxièmes inserts (20) ; et
- les premiers inserts (10) étant retirés avant l'insertion des deuxièmes inserts (20).

2. Procédé selon la revendication 1, comprenant en outre l'étape suivante :
c) disposition d'une couche d'un troisième catalyseur (8) dans les compartiments réactionnels tubulaires (1) au-dessus de la couche de deuxième catalyseur (7) ;
le troisième catalyseur étant un catalyseur en grains ;
dans lequel :
- l'étape c) comprend l'insertion de troisièmes inserts (30) dans les compartiments réactionnels tubulaires (1) puis l'introduction du troisième catalyseur dans les troisièmes inserts (30), chaque troisième insert (30) comportant :
• un corps tubulaire (31) adapté à être introduit dans un compartiment réactionnel tubulaire (1),
• une tête (32) adaptée à coopérer avec l'entrée (5) du compartiment réactionnel tubulaire (1) pour retenir le troisième insert (30),
• la tête (32) étant pourvue d'un canal longitudinal (33) traversant communiquant avec l'intérieur du corps tubulaire (32) ;
- les corps tubulaires (21) des deuxièmes inserts (20) ayant une dimension longitudinale (L2) supérieure à la dimension longitudinale (L3) des corps tubulaires (31) des troisièmes inserts (30) ;
- les têtes (32) des troisièmes inserts (30) étant visuellement distinctes des têtes (12) des premiers inserts (10) et des têtes (22) des deuxièmes inserts (20) ; et
- les deuxièmes inserts (20) étant retirés avant l'insertion des troisièmes inserts (30).

3. Procédé selon la revendication 1 ou 2, dans lequel les têtes (12, 22, 32) des premiers, deuxièmes et éventuellement troisièmes inserts (10, 20, 30) sont de couleurs différentes.

4. Procédé selon l'une des revendications 1 à 3, dans lequel les têtes (12, 22, 32) des premiers, deuxièmes et éventuellement troisièmes inserts (10, 20, 30) présentent une section transversale de forme polygonale, de préférence hexagonale ; et/ou dans lequel les têtes (12) des premiers inserts (10) lors de l'introduction du premier catalyseur, les têtes (22) des deuxièmes inserts (20) lors de l'introduction du deuxième catalyseur, et éventuellement les têtes (32) des troisièmes inserts (30) lors de l'introduction du troisième catalyseur, sont jointives.

5. Procédé selon l'une des revendications 1 à 4, dans lequel chaque étape a), b) et éventuellement c) comprend, après l'introduction du premier, deuxième ou troisième catalyseur, le retrait des premiers, deuxièmes ou troisièmes inserts (10, 20, 30), puis la réinsertion des premiers, deuxièmes ou troisièmes inserts (10, 20, 30) dans les compartiments réactionnels tubulaires (1) en butée de la couche de premier catalyseur (6), de la couche de deuxième catalyseur (7) ou de la couche de troisième catalyseur (8).

6. Procédé selon l'une des revendications 1 à 5, dans lequel les étapes a), b) et éventuellement c) sont effectuées au moins en partie concurremment dans différents compartiments réactionnels tubulaires (1) du réacteur.

7. Procédé selon l'une des revendications 1 à 6, dans lequel le réacteur (40) est divisé en sections (41, 42, 43, 44), chaque étape a), b) et éventuellement c) étant effectuée de manière simultanée pour l'ensemble des compartiments réactionnels tubulaires (1) de chaque section (41, 42, 43, 44).

8. Ensemble d'inserts (10, 20, 30) pour le chargement d'un réacteur catalytique selon le procédé tel que défini selon l'une quelconque des revendications 1 à 7, comprenant une pluralité de compartiments réactionnels tubulaires (1), l'ensemble d'inserts (10, 20, 30) comprenant des premiers inserts (10) et des deuxièmes inserts (20), dans lequel chaque premier insert (10) et chaque deuxième insert (20) comprend :
- un corps tubulaire (11, 21) adapté à être introduit dans un compartiment réactionnel tubulaire (1),
- une tête (12, 22) adaptée à coopérer avec une entrée (5) de compartiment réactionnel tubulaire (1) pour retenir l'insert (10, 20),
- la tête (12, 22) étant pourvue d'un canal longitudinal traversant (13, 23) communiquant avec l'intérieur du corps tubulaire (11, 21) ;
les corps tubulaires (11) des premiers inserts (10) ayant une dimension longitudinale (L1) supérieure à la dimension longitudinale (L2) des corps tubulaires (21) des deuxièmes inserts (20), et les têtes (12) des premiers inserts (10) étant visuellement distinctes et de couleurs différentes des têtes (22) des deuxièmes inserts (20).

9. Ensemble selon la revendication 8, comprenant en outre des troisièmes inserts (30), dans lequel chaque troisième insert (30) comprend :
- un corps tubulaire (31) adapté à être introduit dans un compartiment réactionnel tubulaire (1),
- une tête (32) adaptée à coopérer avec une entrée (5) de compartiment réactionnel tubulaire (1) pour retenir l'insert (30),
- la tête (32) étant pourvue d'un canal longitudinal traversant (33) communiquant avec l'intérieur du corps tubulaire (31) ;
les corps tubulaires (21) des deuxièmes inserts (20) ayant une dimension longitudinale (L2) supérieure à la dimension longitudinale (L3) des corps tubulaires (31) des troisièmes inserts (30), et les têtes (32) des troisièmes inserts (30) étant visuellement distinctes et de couleurs différentes des têtes (12, 22) des premiers inserts (10) et des deuxièmes inserts (20).

10. Ensemble selon l'une des revendications 8 à 9, dans lequel les têtes (12, 22, 32) des premiers, deuxièmes et éventuellement troisièmes inserts (10, 20, 30) présentent une section transversale de forme polygonale, de préférence hexagonale ; et/ou dans lequel les dimensions des têtes (12, 22, 33) des premiers inserts, deuxièmes inserts et éventuellement troisièmes inserts (10, 20, 30) sont telles que ces têtes (12, 22, 32) sont jointives lorsque les premiers, deuxièmes et éventuellement troisièmes inserts (10, 20, 30) sont insérés dans des compartiments réactionnels tubulaires (1) adjacents.

## Patentansprüche

1. Verfahren zur Beschickung eines katalytischen Reaktors, der mehrere rohrförmige Reaktionskammern (1) umfasst, die einen Eingang (5) und einen Boden (4) aufweisen, wobei das Verfahren die folgenden Schritte umfasst:
a) Anordnen einer Schicht eines ersten Katalysators (6) am Boden (4) der rohrförmigen Reaktionskammern (1) ;
b) Anordnen einer Schicht eines zweiten Katalysators (7) in den rohrförmigen Reaktionskammern (1) über der Schicht des ersten Katalysators (6);
wobei der erste Katalysator und der zweite Katalysator körnige Katalysatoren sind;
wobei:
- Schritt a) das Einsetzen erster Einsätze (10) in die rohrförmigen Reaktionskammern (1) und anschließend die Einführung des ersten Katalysators in die ersten Einsätze (10) umfasst, wobei jeder erste Einsatz (10) aufweist:
• einen rohrförmigen Körper (11), der dafür eingerichtet ist, in eine rohrförmige Reaktionskammer (1) eingeführt zu werden,
• ein Kopfstück (12), das dafür eingerichtet ist, mit dem Eingang (5) der rohrförmigen Reaktionskammer (1) zusammenzuwirken, um den ersten Einsatz (10) zu halten,
• wobei das Kopfstück (12) mit einem es durchquerenden Längskanal (13) versehen ist, der mit dem Inneren des rohrförmigen Körpers (11) kommuniziert;
- Schritt b) das Einsetzen zweiter Einsätze (20) in die rohrförmigen Reaktionskammern (1) und anschließend die Einführung des zweiten Katalysators in die zweiten Einsätze (20) umfasst, wobei jeder zweite Einsatz (20) aufweist:
• einen rohrförmigen Körper (21), der dafür eingerichtet ist, in eine rohrförmige Reaktionskammer (1) eingeführt zu werden,
• ein Kopfstück (22), das dafür eingerichtet ist, mit dem Eingang (5) der rohrförmigen Reaktionskammer (1) zusammenzuwirken, um den zweiten Einsatz (20) zu halten,
• wobei das Kopfstück (22) mit einem es durchquerenden Längskanal (23) versehen ist, der mit dem Inneren des rohrförmigen Körpers (21) kommuniziert;
- die rohrförmigen Körper (11) der ersten Einsätze (10) eine Längsabmessung (L1) aufweisen, die größer als die Längsabmessung (L2) der rohrförmigen Körper (21) der zweiten Einsätze (20) ist;
- die Kopfstücke (12) der ersten Einsätze (10) von den Kopfstücken (22) der zweiten Einsätze (20) visuell verschieden sind; und
- die ersten Einsätze (10) vor dem Einsetzen der zweiten Einsätze (20) herausgezogen werden.

2. Verfahren nach Anspruch 1, welches außerdem den folgenden Schritt umfasst:
c) Anordnen einer Schicht eines dritten Katalysators (8) in den rohrförmigen Reaktionskammern (1) über der Schicht des zweiten Katalysators (7);
wobei der dritte Katalysator ein körniger Katalysator ist;
wobei:
- Schritt c) das Einsetzen dritter Einsätze (30) in die rohrförmigen Reaktionskammern (1) und anschließend die Einführung des dritten Katalysators in die dritten Einsätze (30) umfasst, wobei jeder dritte Einsatz (30) aufweist:
• einen rohrförmigen Körper (31), der dafür eingerichtet ist, in eine rohrförmige Reaktionskammer (1) eingeführt zu werden,
• ein Kopfstück (32), das dafür eingerichtet ist, mit dem Eingang (5) der rohrförmigen Reaktionskammer (1) zusammenzuwirken, um den dritten Einsatz (30) zu halten,
• wobei das Kopfstück (32) mit einem es durchquerenden Längskanal (33) versehen ist, der mit dem Inneren des rohrförmigen Körpers (31) kommuniziert;
- die rohrförmigen Körper (21) der zweiten Einsätze (20) eine Längsabmessung (L2) aufweisen, die größer als die Längsabmessung (L3) der rohrförmigen Körper (31) der dritten Einsätze (30) ist;
- die Kopfstücke (32) der dritten Einsätze (30) von den Kopfstücken (12) der ersten Einsätze (10) und den Kopfstücken (22) der zweiten Einsätze (20) visuell verschieden sind; und
- die zweiten Einsätze (20) vor dem Einsetzen der dritten Einsätze (30) herausgezogen werden.

3. Verfahren nach Anspruch 1 oder 2, wobei die Kopfstücke (12, 22, 32) der ersten, zweiten und gegebenenfalls dritten Einsätze (10, 20, 30) verschiedene Farben haben.

4. Verfahren nach einem der Ansprüche 1 bis 3, wobei die Kopfstücke (12, 22, 32) der ersten, zweiten und gegebenenfalls dritten Einsätze (10, 20, 30) einen Querschnitt von polygonaler, vorzugsweise sechseckiger, Form aufweisen; und/oder wobei die Kopfstücke (12) der ersten Einsätze (10) bei der Einführung des ersten Katalysators, die Kopfstücke (22) der zweiten Einsätze (20) bei der Einführung des zweiten Katalysators und gegebenenfalls die Kopfstücke (32) der dritten Einsätze (30) bei der Einführung des dritten Katalysators aneinander angrenzen.

5. Verfahren nach einem der Ansprüche 1 bis 4, wobei jeder Schritt a), b) und gegebenenfalls c) nach der Einführung des ersten, zweiten oder dritten Katalysators das Herausziehen der ersten, zweiten oder dritten Einsätze (10, 20, 30) und anschließend das erneute Einsetzen der ersten, zweiten oder dritten Einsätze (10, 20, 30) in die rohrförmigen Reaktionskammern (1) derart, dass sie an die Schicht des ersten Katalysators (6), die Schicht des zweiten Katalysators (7) oder die Schicht des dritten Katalysators (8) anstoßen, umfasst.

6. Verfahren nach einem der Ansprüche 1 bis 5, wobei die Schritte a), b) und gegebenenfalls c) wenigstens teilweise gleichzeitig in verschiedenen rohrförmigen Reaktionskammern (1) des Reaktors ausgeführt werden.

7. Verfahren nach einem der Ansprüche 1 bis 6, wobei der Reaktor (40) in Abschnitte (41, 42, 43, 44) aufgeteilt ist, wobei jeder Schritt a), b) und gegebenenfalls c) gleichzeitig für die Gesamtheit der rohrförmigen Reaktionskammern (1) jedes Abschnitts (41, 42, 43, 44) ausgeführt wird.

8. Gesamtheit von Einsätzen (10, 20, 30) zur Beschickung eines katalytischen Reaktors, der mehrere rohrförmige Reaktionskammern (1) umfasst, gemäß dem Verfahren, wie nach einem der Ansprüche 1 bis 7 definiert, wobei die Gesamtheit von Einsätzen (10, 20, 30) erste Einsätze (10) und zweite Einsätze (20) umfasst, wobei jeder erste Einsatz (10) und jeder zweite Einsatz (20) umfasst:
- einen rohrförmigen Körper (11, 21), der dafür eingerichtet ist, in eine rohrförmige Reaktionskammer (1) eingeführt zu werden,
- ein Kopfstück (12, 22), das dafür eingerichtet ist, mit einem Eingang (5) der rohrförmigen Reaktionskammer (1) zusammenzuwirken, um den Einsatz (10, 20) zu halten,
- wobei das Kopfstück (12, 22) mit einem es durchquerenden Längskanal (13, 23) versehen ist, der mit dem Inneren des rohrförmigen Körpers (11, 21) kommuniziert;
wobei die rohrförmigen Körper (11) der ersten Einsätze (10) eine Längsabmessung (L1) aufweisen, die größer als die Längsabmessung (L2) der rohrförmigen Körper (21) der zweiten Einsätze (20) ist, und die Kopfstücke (12) der ersten Einsätze (10) von den Kopfstücken (22) der zweiten Einsätze (20) visuell verschieden sind und andere Farben als diese haben.

9. Gesamtheit nach Anspruch 8, welche außerdem dritte Einsätze (30) umfasst, wobei jeder dritte Einsatz (30) umfasst:
- einen rohrförmigen Körper (31), der dafür eingerichtet ist, in eine rohrförmige Reaktionskammer (1) eingeführt zu werden,
- ein Kopfstück (32), das dafür eingerichtet ist, mit einem Eingang (5) der rohrförmigen Reaktionskammer (1) zusammenzuwirken, um den Einsatz (30) zu halten,
- wobei das Kopfstück (32) mit einem es durchquerenden Längskanal (33) versehen ist, der mit dem Inneren des rohrförmigen Körpers (31) kommuniziert;
wobei die rohrförmigen Körper (21) der zweiten Einsätze (20) eine Längsabmessung (L2) aufweisen, die größer als die Längsabmessung (L3) der rohrförmigen Körper (31) der dritten Einsätze (30) ist, und die Kopfstücke (32) der dritten Einsätze (30) von den Kopfstücken (12, 22) der ersten Einsätze (10) und der zweiten Einsätze (20) visuell verschieden sind und andere Farben als diese haben.

10. Gesamtheit nach einem der Ansprüche 8 bis 9, wobei die Kopfstücke (12, 22, 32) der ersten, zweiten und gegebenenfalls dritten Einsätze (10, 20, 30) einen Querschnitt von polygonaler, vorzugsweise sechseckiger, Form aufweisen; und/oder wobei die Abmessungen der Kopfstücke (12, 22, 32) der ersten Einsätze, zweiten Einsätze und gegebenenfalls dritten Einsätze (10, 20, 30) derart sind, dass diese Kopfstücke (12, 22, 32) aneinander angrenzen, wenn die ersten, zweiten und gegebenenfalls dritten Einsätze (10, 20, 30) in benachbarte rohrförmige Reaktionskammern (1) eingesetzt sind.

## Claims

1. Method for filling a catalytic reactor comprising a plurality of tubular reaction compartments (1) having an inlet (5) and a closed end (4), the method comprising the following steps:
a). placing a layer of a first catalyst (6) in the closed end (4) of the tubular reaction compartments (1);
b) placing a layer of a second catalyst (7) in the tubular reaction compartments (1) on top of the layer of first catalyst (6);
the first catalyst and the second catalyst being granular catalysts;
in which:
- step a) involves inserting first inserts (10) into the tubular reaction compartments (1) then introducing the first catalyst into the first inserts (10), each first insert (10) comprising:
• a tubular body (11) designed to be introduced into a tubular reaction compartment (1),
• a head (12) designed to collaborate with the inlet (5) of the tubular reaction compartment (1) in order to hold the first insert (10) in place,
• the head (12) being provided with a longitudinal through-passage (13) communicating with the inside of the tubular body (11);
- step b) involves inserting second inserts (20) into the tubular reaction compartments (1) then introducing the second catalyst into the second inserts (20), each second insert (20) comprising:
• a tubular body (21) designed to be introduced into a tubular reaction compartment (1),
• a head (22) designed to collaborate with the inlet (5) of the tubular reaction compartment (1) in order to hold the second insert (20) in place,
• the head (22) being provided with a longitudinal through-passage (23) communicating with the inside of the tubular body (21);
- the tubular bodies (11) of the first inserts (10) having a longitudinal dimension (L1) greater than the longitudinal dimension (L2) of the tubular bodies (21) of the second inserts (20);
- the heads (12) of the first inserts (10) being visually distinct from the heads (22) of the second inserts (20); and
- the first inserts (10) being removed before the second inserts (20) are inserted.

2. Method according to Claim 1, further comprising the following step:
c) placing a layer of a third catalyst (8) in the tubular reaction compartments (1) on top of the layer of second catalyst (7);
the third catalyst being a granular catalyst;
in which:
- step c) involves inserting third inserts (30) into the tubular reaction compartments (1) then introducing the third catalyst into the third inserts (30), each third insert (30) comprising:
• a tubular body (31) designed to be introduced into a tubular reaction compartment (1),
• a head (32) designed to collaborate with the inlet (5) of the tubular reaction compartment (1) in order to hold the third insert (30) in place,
• the head (32) being provided with a longitudinal through-passage (33) communicating with the inside of the tubular body (31);
- the tubular bodies (21) of the second inserts (20) having a longitudinal dimension (L2) greater than the longitudinal dimension (L3) of the tubular bodies (31) of the third inserts (30);
- the heads (32) of the third inserts (30) being visually distinct from the heads (12) of the first inserts (10) and from the heads (22) of the second inserts (20); and
- the second inserts (20) being removed before the third inserts (30) are inserted.

3. Method according to Claim 1 or 2, in which the heads (12, 22, 32) of the first, second and, where applicable, third, inserts (10, 20, 30) are different colours.

4. Method according to one of Claims 1 to 3, in which the heads (12, 22, 32) of the first, second and, where applicable, third, inserts (10, 20, 30) have a cross section of polygonal shape, preferably hexagonal; and/or in which the heads (12) of the first inserts (10) when the first catalyst is being introduced, the heads (22) of the second inserts (20) when the second catalyst is being introduced, and, where applicable, the heads (32) of the third inserts (30) when the third catalyst is being introduced, are contiguous.

5. Method according to one of Claims 1 to 4, in which each step a), b), and, where applicable, c), comprises, after the first, second or third catalyst has been introduced, the removal of the first, second or third inserts (10, 20, 30), followed by the reinsertion of the first, second or third inserts (10, 20, 30) in the tubular reaction compartments (1) butting up against the layer of first catalyst (6), the layer of second catalyst (7) or the layer of third catalyst (8).

6. Method according to one of Claims 1 to 5, in which steps a), b), and, where applicable, c), are carried out at least partially concurrently in various tubular reaction compartments (1) of the reactor.

7. Method according to one of Claims 1 to 6, in which the reactor (40) is divided into sections (41, 42, 43, 44), each step a), b), and, where applicable, c), being performed simultaneously for all of the tubular reaction compartments (1) of each section (41, 42, 43, 44).

8. Set of inserts (10, 20, 30) for filling a catalytic reactor according to the method defined in any one of Claims 1 to 7 comprising a plurality of tubular reaction compartments (1), the set of inserts (10, 20, 30) comprising first inserts (10) and second inserts (20), in which each first insert (10) and each second insert (20) comprises:
- a tubular body (11, 21) designed to be introduced into a tubular reaction compartment (1),
- a head (12, 22) designed to collaborate with an inlet (5) of the tubular reaction compartment (1) in order to hold the insert (10, 20) in place,
- the head (12, 22) being provided with a longitudinal through-passage (13, 23) communicating with the inside of the tubular body (11, 21);
the tubular bodies (11) of the first inserts (10) having a longitudinal dimension (L1) greaterthan the longitudinal dimension (L2) of the tubular bodies (21) of the second inserts (20), and the heads (12) of the first inserts (10) being visually distinct and different colours from the heads (22) of the second inserts (20).

9. Set according to Claim 8, further comprising third inserts (30), in which each third insert (30) comprises:
- a tubular body (31) designed to be introduced into a tubular reaction compartment (1),
- a head (32) designed to collaborate with an inlet (5) of the tubular reaction compartment (1) in order to hold the insert (30) in place,
- the head (32) being provided with a longitudinal through-passage (33) communicating with the inside of the tubular body (31);
the tubular bodies (21) of the second inserts (20) having a longitudinal dimension (L2) greater than the longitudinal dimension (L3) of the tubular bodies (31) of the third inserts (30), and the heads (32) of the third inserts (30) being visually distinct and different colours from the heads (12, 22) of the first inserts (10) and of the second inserts (20).

10. Set according to one of Claims 8 and 9, in which the heads (12, 22, 32) of the first, second and, where applicable, third, inserts (10, 20, 30) have a cross section of polygonal shape, preferably hexagonal; and/or in which the dimensions of the heads (12, 22, 33) of the first inserts, second inserts, and, where applicable, third inserts (10, 20, 30) are such that these heads (12, 22, 32) are contiguous when the first, second, and, where applicable, third, inserts (10, 20, 30) are inserted into adjacent tubular reaction compartments (1).
